**Europäisches Patentamt**

(19) **European Patent Office**

**Office européen des brevets**

(11) Veröffentlichungsnummer: **0 015 305**
**B1**

(12) # EUROPÄISCHE PATENTSCHRIFT

(45) Veröffentlichungstag der Patentschrift:
20.10.82

(51) Int. Cl.³: **F 16 B 13/04**

(21) Anmeldenummer: **79103794.8**

(22) Anmeldetag: **04.10.79**

(54) **Formschlüssig setzbarer Dübel.**

(30) Priorität: **22.02.79 DE 2906914**

(43) Veröffentlichungstag der Anmeldung:
**17.09.80 Patentblatt 80/19**

(45) Bekanntmachung des Hinweises auf die Patenterteilung:
**20.10.82 Patentblatt 82/42**

(84) Benannte Vertragsstaaten:
**AT BE CH FR GB IT NL SE**

(56) Entgegenhaltungen:
**EP-A-0 002 654**
**AT-B-336 239**
**DD-A-108 356**
**DE-A-1 625 466**
**DE-A-2 403 699**
**DE-A-2 507 658**
**DE-A-2 632 487**
**US-A-3 439 576**

(73) Patentinhaber: **Liebig, Heinrich, Wormser Strasse 23,
D-6102 Pfungstadt (DE)**

(72) Erfinder: **Liebig, Heinrich, Wormser Strasse 23,
D-6102 Pfungstadt (DE)**

(74) Vertreter: **Helber, Friedrich G., Dipl.-Ing. et al, Giesser
Weg 47, D-6144 Zwingenberg (DE)**

# Formschlüssig setzbarer Dübel

Die Erfindung betrifft einen in einer mit einer radial umlaufenden Hinterschnittfläche versehenen Bohrung formschlüssig setzbaren Dübel mit einem dem Durchmesser der Bohrung im wesentlichen entsprechenden und in die Bohrung einführbaren Dübelkörper, an dem Riegelelemente gehaltert sind, deren zur Bohrungsmündung weisende Enden von einer innerhalb des Durchmessers der Bohrung liegenden Lage in eine Lage verschwenkbar sind, in welcher sie zumindest teilweise über den Durchmesser des Dübelkörpers vorstehen und die Hinterschnittfläche der Bohrung verriegelnd hintergreifen, wobei der Dübelkörper ein am bohrungsinneren Ende eines langgestreckten Befestigungsbolzens angeordnetes Kopfstück relativ geringer Höhe ist, auf dem die bohrungsinneren Enden der zu einer den Befestigungsbolzen umschliessenden dickwandigen zylindrischen Hülse zusammengeschlossenen Riegelelemente aufsitzen, und der an seinem äusseren Ende einen Schraubenkopf oder eine auf ein Gewinde des Befestigungsbolzens aufgeschraubte Mutter tragende Befestigungsbolzen einen zwischen die zur Bohrungsmündung weisenden Enden der Riegelelemente eingreifenden, sich zum Bohrungsinnern konisch verjüngenden Bauteil aufweist, der bei einer Verschiebung des Kopfstücks in Richtung zur Bohrungsmündung die rückwärtigen Enden der Riegelelemente zwangsläufig nach aussen verschwenkt, und wobei zwischen dem längsverschieblich auf dem Befestigungsbolzen angeordneten, sich konisch verjüngenden Bauteil und dem Schraubenkopf bzw. der Mutter wenigstens eine, in Bolzenlängsrichtung verschiebliche Hülse und eine durch axiale Zusammendrückung unter Vorspannung setzbare Schraubenfeder angeordnet sind.

Bei Dübeln mit durch einen konischen Bauteil aufspreizbaren, an der Wandung einer zugehörigen Bohrung zur Anlage bringbaren Elementen ist die Anordnung einer den konischen Bauteil unter Vorspannung zwischen die an der Bohrungswandung anlegbaren Elemente drängenden Schraubenfeder bekannt (AT-B-336 239). Dabei handelt es sich allerdings um einen Spreizdübel, der durch Aufspreizen und feste flächige Anpassung der von längsverlaufenden Einschnitten in einer Spreizhülse gebildeten Elemente an die Bohrungswandung, d.h. durch Kraftschluss, in der zugehörigen Bohrung gesetzt wird. Bei diesem bekannten Dübel dient die nach dem Setzen des Dübels in der Feder gespeicherte Vorspannung der Sicherung des Dübels gegen Lösen bei auftretenden Erschütterungen und Vibrationen. Da der Andruck der Spreizülsen-Elemente an der Bohrungswandung ausschliesslich von der Vorspannung der Feder abhängt, muss diese also bezüglich der Materialstärke so bemessen und beim Setzvorgang derart zusammengedrückt werden, dass sie nach dem Setzen des Dübels die erforderliche Spreiz- und Haltekraft erbringt. Wesentlich ist also, dass die Feder eine hohe Vorspannung auf dem relativ kurzen Spreizweg erzeugt, den die Spreizhülsen-Elemente beim Spreizvorgang bis zur Anlage an die Bohrungswandung zurücklegen.

Demgegenüber liegt der Erfindung die Aufgabe zugrunde, einen formschlüssig in einer Bohrung setzbaren, d.h. an einer umlaufenden Hinterschnittfläche eines innerhalb der Bohrung vorgesehenen Hinterschnitts verriegelbaren Dübel zu schaffen, wofür es wesentlich ist, dass die diese Verriegelung bewirkenden Riegelelemente beim Erreichen der vorgesehenen Setztiefe mit Sicherheit über einen vergleichsweise grösseren Schwenkweg in die die Hinterschnittfläche hintergreifende Lage verschwenkt werden, während sie vor dem Setzvorgang in der eine Durchsteckmontage ermöglichenden eingeschwenkten Lage gehalten sind.

Ausgehend von einem Dübel der eingangs erwähnten Art wird diese Aufgabe bei einem ersten Ausführungsbeispiel erfindungsgemäss dadurch gelöst, dass die Schraubenfeder zwischen einer mit ihrem bohrungsinneren Ende an dem sich konisch verjüngenden Bauteil anschliessenden Hülse und einer mit ihrem bohrungsäusseren Ende an der Unterseite des Schraubenkopfs bzw. der Mutter oder einer gegebenenfalls darunter angeordneten Unterlegscheibe abgestützten Hülse angeordnet ist, und dass die Schraubenfeder in axial zusammengedrückter Form vorgespannt und die Vorspannung durch wenigstens ein mit seinen Enden an jeweils einer der beiden Hülsen befestigtes, unter Zugspannung stehendes Spannelement fixiert ist.

Das unter Zugspannung stehende Spannelement hält die beiden Hülsen also in solchem Abstand, dass die Schraubenfeder soweit unter Vorspannung zusammengedrückt ist, dass der sich konisch verjüngende Bauteil in einer Lage gehalten wird, in welcher er die Riegelelemente noch nicht in die Verriegelungsstellung auszuschwenken vermag. Die sich am konisch verjüngenden Bauteil anschliessende Hülse kann dabei mit diesem Bauteil auch zu einem einstückigen hülsenförmigen Bauteil mit sich konisch verjüngendem Ende vereinigt sein.

Das Spannelement kann beispielsweise ein mit seinen Enden an jeweils einer der Hülsen verklebtes Band sein, dessen an der rückwärtigen Hülse haftendes Ende nach dem Einführen des Dübels in die zugehörige Bohrung von der Hülse abgerissen wird. Die Vorspannung der Schraubenfeder drückt dann über die bohrungsinnere Hülse auf den sich verjüngenden Bauteil, der seinerseits die Riegelelemente auszuschwenken sucht. Die rückwärtigen äusseren Kanten der Riegelelemente werden also an die Wandung der Bohrung angedrückt und schleifen beim Einschieben des Dübels an dieser Wandung entlang, bis der Hinterschnitt erreicht wird, wo die Riegelelemente dann in die Verriegelungsstellung aufspringen.

Zweckmässig ist die Anordnung einer Zuglasche zum Abreissen bzw. Durchtrennen des Spannelements im Bereich seiner Befestigung an der äusseren Hülse.

Eine alternative Möglichkeit, die Schraubenfeder in der zusammengedrückten vorgespannten Lage zu fixieren, ist bei einem alternativen Ausführungsbeispiel verwirklicht, bei dem über den zur Bohrungsmündung weisenden Endbereich der Riegelelemente ein Spannring gelegt ist, der das Ausschwenken der Riegelelemente verhindert. Beim Einführen des Dübels in die Bohrung kann dieser Spannring dann durch Abstreifen von den Riegelelementen entgegen der Einführrichtung entfernt werden.

Das Abstreifen dieses Spannrings kann von Hand durch die den Dübel setzende Person erfolgen, jedoch empfiehlt sich eine Weiterbildung derart, dass der Spannring zumindest einen oder auch mehrere in gleichmässigen Winkelabständen verteilte, über das Durchmessermass der zugehörigen Bohrung vortretende(n) Ringabschnitt(e) aufweist, der bzw. die beim Einschieben des Dübels in eine zugehörige Bohrung an der Oberfläche des zu befestigenden Werkstücks bzw. der mit der Bohrung versehenen Wand anstösst bzw. anstossen und bei fortgesetztem Einschiebevorgang den Spannring von den Riegelelementen abstreift bzw. abstreifen. Der Spannring löst sich in diesem Falle also selbsttätig und eine besondere Manipulation durch die den Dübel setzende Person entfällt.

Wenn die Riegelelemente durch einen auf ihrer Aussenseite aufgelegten elastisch aufweitbaren Ring gehalten werden, der sie in der eingeschwenkten Stellung hält, wird die Schraubenfeder so stark bemessen, dass die durch axiale Zusammendrückung in ihr gespeicherte Federkraft grösser als der vom elastisch aufweitbaren Ring einer Verschwenkung der Riegelelemente entgegengesetzte Widerstand ist. Von Vorteil ist weiter eine bei den beiden vorerwähnten Ausführungsbeispielen des erfindungsgemässen Dübels verwirklichbare Ausgestaltung derart, dass in den zur Bohrungsmündung weisenden Stirnflächen der Riegelelemente jeweils wenigstens ein, vorzugsweise mehrere radial verlaufende Zähne mit zugespitztem Querschnitt eingearbeitet sind. Beim Spannen und Belasten des Dübels dringen dann die Zähne, und zwar zunächst mit ihren radial aussen gelegenen Spitzen, in das Material der Hinterschnittfläche etwas ein, wodurch einer bei beispielsweise infolge eines abgenutzten Hinterschnittwerkzeugs unexakt eingearbeiteten Hinterschnittfläche oder bei zufälligem Vorhandensein eines härteren Kieselsteins im Material der Hinterschnittfläche sonst möglichen Tendenz zur Zurückverschwenkung der Riegelelemente erfolgreich entgegengewirkt wird.

Um die Belastbarkeit des gesetzten Dübels zu optimieren und zu verhindern, dass die bei ausgeschwenkten Riegelelementen rechtwinklig zur Dübel-Längsachse wirkende Komponente der Spannkraft der bohrungsinneren Enden der Riegelelemente in Richtung auf den Befestigungsbolzen drängt und dabei möglicherweise dessen Gewinde beschädigt, können die ins Bohrungsinnere weisenden Stirnflächen der Riegelelemente derart abgeschrägt sein, dass sie in ausgeschwenkter Verriegelungsstellung flächig auf der zur Bohrungsmündung weisenden Stirnfläche des Kopfstückes abgestützt sind, wobei an den Stirnflächen der Riegelelemente dann zweckmässig je eine vorspringende Halterungsrippe vorgesehen ist, die in der ausgeschwenkten Verriegelungsstellung komplementär in eine in der Stirnfläche des Kopfstücks vorgesehene Ringnut eingreift.

Die Erfindung ist in der folgenden Beschreibung von Ausführungsbeispielen in Verbindung mit der Zeichnung näher erläutert, und. zwar zeigt:

Fig. 1 eine Schnittansicht durch einen Wandabschnitt mit einer Hinterschnittbohrung, in welche ein teilweise im Längsmittelschnitt dargestellter erfindungsgemässer Dübel in noch unverriegeltem Zustand eingesetzt ist, wobei die Verriegelungsstellung der Riegelelemente strichpunktiert angedeutet ist;

Fig. 2 eine Seitenansicht des in Fig. 1 gezeigten Dübels;

Fig. 3 eine perspektivische Ansicht eines Spannelements zur Fixierung der Vorspannung der Schraubenfeder des erfindungsgemässen Dübels in der zusammengedrückten, vorgespannten Stellung;

Fig. 4 eine Draufsicht auf das in Fig. 3 gezeigte Spannelement;

Fig. 5 den in Fig. 2 im strichpunktierten Kreis 5 dargestellten Teil eines zweiten Ausführungsbeispiels eines erfindungsgemässen Dübels;

Fig. 6 eine Draufsicht auf den beim Ausführungsbeispiel gemäss Fig. 5 verwendeten Spannring zur Fixierung der Schraubenfeder in der zusammengedrückten, vorgespannten Stellung;

Fig. 7 eine Seitenansicht eines Riegelelements des erfindungsgemässen Dübels, an dessen Bohrungsmündung weisender Stirnfläche meisselähnliche Zähne vorgesehen sind;

Fig. 8 eine Draufsicht auf die zur Bohrungsmündung weisende Stirnfläche des Kopfstücks des erfindungsgemässen Dübels; und

Fig. 9 eine Schnittansicht gesehen in Richtung der Pfeile 9-9 in Fig. 8.

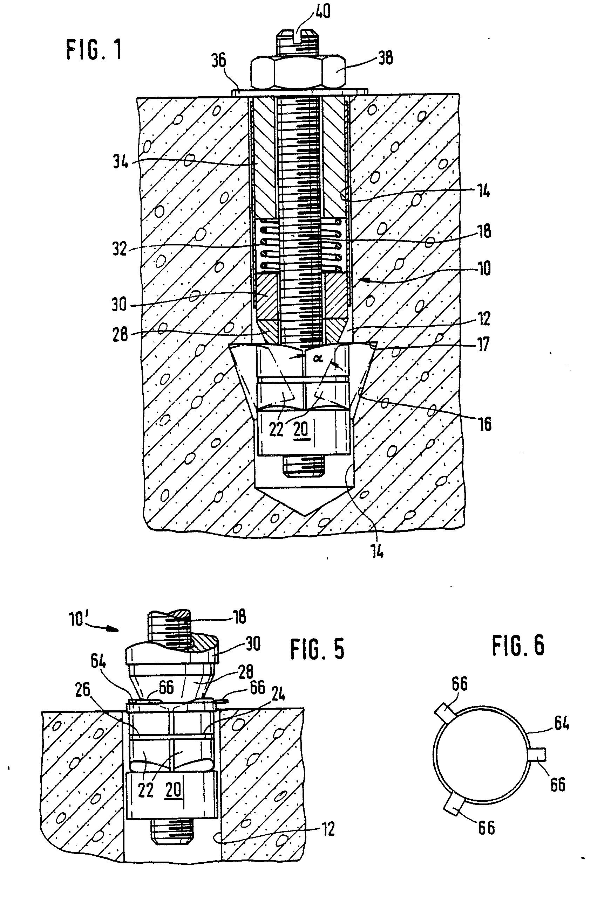

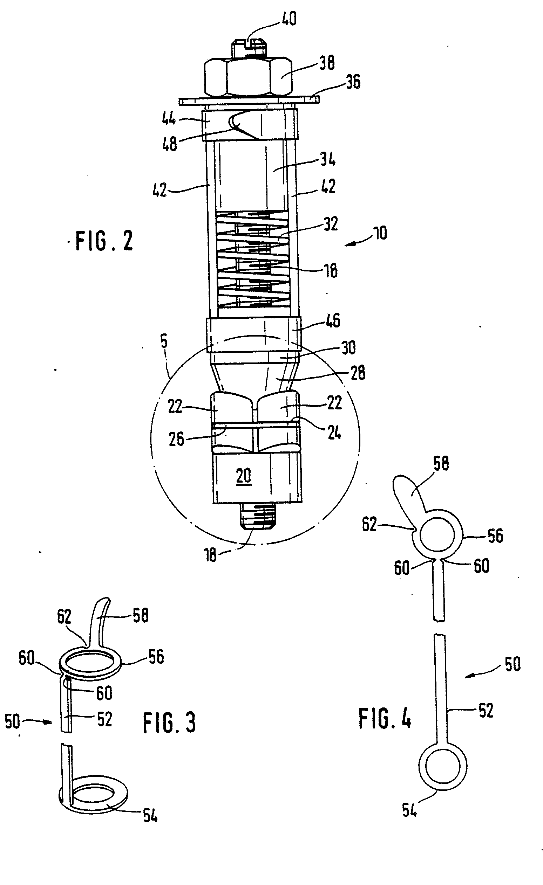

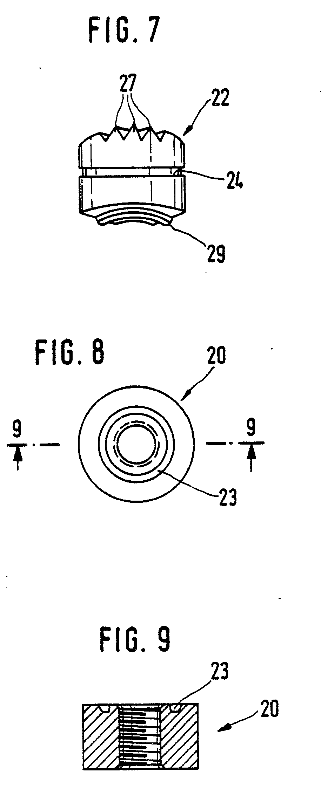

Der in Fig. 1 und 2 gezeigte, in seiner Gesamtheit mit 10 bezeichnete erfindungsgemässe Dübel soll formschlüssig in einer Bohrung 12 gesetzt — d.h. verriegelt — werden, die sich aus einer zylindrischen Vorbohrung 14 und einer mit Abstand von der Mündung der Bohrung vorgesehenen Erweiterungsbohrung 16 mit einer rückwärts zur Bohrungsmündung gewandten Hinterschnittfläche 17 zusammensetzt. Der Dübel 10 weist einen langgestreckten, im gezeigten Fall ein durchgehendes Gewinde tragenden Befestigungsbolzen 18 auf, auf dessen bohrungsinnerem Ende ein im Durchmesser nur geringfügig kleiner als der Durchmesser der Vorbohrung 14 bemessenes Kopfstück 20 aufgeschraubt ist. Der Befestigungsbolzen 18 ist also durch Drehen in das Kopfstück 20 hinein und aus ihm herausschraubbar. Auf der rückwärts, d.h. zur Bohrungsmündung gewandten, mit einer umlaufenden vertieften Ringnut 23 (Fig. 8 und 9) versehenen Stirnfläche des Kopfstücks 20 sind drei Riegelelemente 22 in gleichmässigen Winkelabständen um den Befestigungsbolzen herum verteilt abgestützt, die in der in den Figuren 1 und 2 gezeigten Einführlage zusammengenommen die Form einer dickwandigen Hülse haben, die aber durch drei in Längsrichtung verlaufende Axialschnitte in die drei Riegelelemente 22 unterteilt ist. Ein in eine radial in der Aussenfläche der Riegelelemente eingestochene Nut 24 eingelegter elastisch aufweitbarer Ring 26 hält die Riegelelemente in der gezeigten Hülsenform zusammen. In den rückwärts zur Bohrungsmündung weisenden Stirnflächen der Riegelelemente können radial verlaufende, im Querschnitt zugespitzte Zähne 27 (Fig. 7) eingearbeitet sein, die durch die Konzentration der Spannkraft beim Setzen und Belasten des Dübels 10 zunächst meisselartig etwas in das Material der Hinterschnittfläche 17 eindringen und die Tendenz der Riegelelemente in die Verriegelungsstellung auszuschwenken fördern, auch wenn die Hinterschnittfläche z.B. durch ein etwas abgenutztes Hinterschnittwerkzeug nicht exakt radial eingearbeitet ist oder wenn sich im Anlagebereich der Stirnfläche im Betonmaterial zufällig ein härterer Kiesel od. dgl. befindet. Die Riegelelemente 22 sind in ihrer Dicke so bemessen, dass die in der Einführlage von ihnen gebildete Hülse einen etwas kleineren Durchmesser als die Bohrung hat. Von den dem Kopfstück zugewandten Stirnflächen der Riegelelemente springt je eine kreisbogenförmige, komplementär in die Ringnut 23 des Kopfstücks 20 passende Halterungsrippe 29 vor. Im Anschluss an die Riegelelemente 22 ist ein sich zum Bohrungsinnern hin konisch verjüngender und mit dem verjüngten Ende zwischen die Riegelelemente 22 greifender Bauteil 28 längsverschieblich auf dem Befestigungsbolzen 18 angeordnet. An den Bauteil 28 schliesst sich — ebenfalls längsverschieblich auf dem Befestigungsbolzen 18 — eine kurze Hülse 30 an, die mit dem Bauteil 28 auch zu einem einheitlichen, sich am inneren Ende konisch verjüngenden Hülsenbauteil zusammengeschlossen sein kann. Auf der rückwärtigen Stirnfläche der Hülse 30 ist eine durch axiale Zusammendrückung vorgespannte Schraubenfeder 32 angeordnet, deren bohrungsäusseres Ende an der bohrungsinneren Stirnfläche einer wiederum längsverschieblich auf dem Befestigungsbolzen 18 angeordneten weiteren kurzen Hülse 34 abgestützt ist. Das äussere Ende der Hülse 34 wird über eine zwischengelegte Unterlegscheibe 36 an einer auf den Befestigungsbolzen aufgeschraubten Mutter 38 abgestützt, wobei mit einem in einen in der äusseren Stirnfläche des Befestigungsbolzens 18 vorgesehenen Schraubenzieherschlitz 40 eingesetzten Schraubenzieher das Mitdrehen des Befestigungsbolzens beim Drehen der Mutter 38 verhindert werden kann. Die zwischen der Mutter 38 und der Hülse 34 vorgesehene Unterlegscheibe 42 überträgt die beim Anziehen der Mutter 38 nach der Verriegelung der Riegelelemente 22 an der Hinterschnittfläche 17 erzeugte Einspannkraft auf die Oberfläche eines zu befestigenden Werkstücks.

Anstelle der Mutter 38 kann am Ende des Befestigungsbolzens 18 auch ein Schraubenkopf angestaucht sein, bei dessen Drehung sich der Befestigungsbolzen in das Kopfstück 20 einschraubt.

Der aufweitbare Ring 26 ist in seinem Widerstand gegen elastische Aufweitung so gewählt, dass die die Riegelelemente in der eingeschwenkten Lage haltende elastische Kraft wesentlich geringer als die in der Schraubenfeder 32 gespeicherte und über den Bauteil 28 auf das rückwärtige Ende der Riegelelemente 22 einwirkende Spannkraft ist. Ohne zusätzliche Massnahmen werden die Riegelelemente daher von der Feder 32 in die in Fig. 1 strichpunktiert dargestellte um den Winkel α ausgeschwenkte Lage verdrängt, in welcher ihre entsprechend abgeschrägten Stirnflächen flächig an der Hinterschnittfläche 17 bzw. der Stirnfläche des Kopfstücks 20 anliegen.

Durch Zurückziehen der Hülse 30 und Spannung der Schraubenfeder 32 beim Einführen des vorderen Endes des Dübels 10 in die Bohrung eines zu befestigenden Werkstücks bzw. in die Bohrung 12 können die Riegelelemente entlastet werden, wobei sie vom Ring 36 in die eingeschwenkte Lage zurückgedrängt werden. Das Setzen des Dübels 10 in der bisher beschriebenen Form ist also durch das Zurückziehen der Hülse 30 möglich, jedoch erfordert es die spezielle Manipulation an dieser Hülse 30, so dass in erfindungsgemässer Weiterbildung Mittel vorgesehen sind, welche die Hülse in der zurückgezogenen, die Schraubenfeder 32 vorgespannt fixierenden Lage halten. Solche Mittel sind beispielsweise in Fig. 2 gezeigt, und bestehen dort aus zwei mit ihren Enden an den Umfangsflächen der Hülsen 30 und 34 befestigten Spannelementen in Form von Bändern 42. Die Enden der Bänder 42 können direkt mit den Hülsen 30, 34 verklebt oder durch je ein gesondertes um die Hülsen herumgelegtes Klebeband 44 bzw. 46 mit den Hülsen verbunden sein. Zum Lösen der Fixierung der Schraubenfeder werden die an der äusseren Hülse befestigten Enden der Bänder 42 nach dem Einführen des Dübels 10 in die Bohrung dadurch gelöst, dass das Klebeband 44 an seinem als Zuglasche 48 ausgebildeten Ende aufgerissen wird. Die in der Schraubenfeder 32 gespeicherte Vorspannkraft wirkt dann über den sich konisch verjüngenden Bauteil 28 auf die Riegelelemente und diese werden in der oben geschilderten Weise in die ausgeschwenkte Verriegelungslage gedrängt.

Anstelle der mit den Hülsen 30, 34 verklebten Bänder 42 kann auch das in den Figuren 3 und 4 gezeigte aus Kunststoff gespritzte Spannelement 50 treten, das sich aus dem eigentlichen Spannsteg 52 und an seinen Enden einstückig angespritzten Ringen 54, 56 zusammensetzt. Beim montierten Dübel 10 liegt der untere Ring 54 zwischen dem konischen Bauteil 28 und der Stirnfläche der Hülse 30 und der Ring 56 zwischen der äusseren Stirnfläche der Hülse 34 und der Unterlegscheibe 36. Der Spannsteg 52 ist in der Länge so bemessen, dass die Hülsen 30 und 34 auf dem die Feder 32 in der geforderten Weise zusammendrückenden Abstand gehalten werden. Eine Zuglasche 58 am äusseren Ring 56 sowie Sollbruchkerben 60 am Anschluss des Spannstegs 52 am Ring 56 und eventuell eine zusätzliche Sollbruchkerbe 62 im Ring 56 ermöglichen die Entspannung der Schraubenfeder 32 durch Abreissen des Rings 56 vom Spannsteg 52 und gegebenenfalls auch das Aufreissen des Rings 56 selbst, der dann zwischen der Hülse 34 und der Unterlegscheibe 36 herausgezogen werden kann.

Eine alternative Möglichkeit der Fixierung der Schraubenfeder 32 in der zusammengedrückten vorgespannten Stellung ist in Fig. 5 veranschaulicht, in der nur das Vorderende eines abgewandelten Ausführungsbeispiels eines Dübels 10' dargestellt ist. Da der Dübel 10' in seinem Aufbau dem zuvor beschriebenen Dübel 10 weitgehend entspricht und gleiche Teile in beiden Fällen mit gleichen Bezugszeichen versehen sind, genügt es, hinsichtlich des allgemeinen Aufbaus des Dübels 10' auf die vorausgehende Beschreibung zu verweisen. Anstelle der Bänder 42 bzw. des Spannelements 50 ist beim Dübel 10' jedoch ein auf dem rückwärtigen Endbereich der Riegelelemente aufgeschobener und diese in der eingeschwenkten Lage haltender dünner Spannring 64 vorgesehen, der die Entspannung der Schraubenfeder 32 zunächst verhindert. In gleichmässigen Winkelabständen verteilt vom Spannring 64 über das Durchmessermass der Bohrung 12 radial vorstehende Lappen 66 dienen dazu, den Spannring 64 beim Einführen in die Bohrung 12 von den Riegelelementen 22 abzustreifen, so dass das Lösen der Vorspannung der Feder 32 in diesem Falle also automatisch durch den beim Einsetzen auf den Dübel 10' ausgeübten Axialdruck erfolgt.

Im Rahmen des Erfindungsgedankens können Abwandlungen und Weiterbildungen der vorstehend beschriebenen formschlüssig setzbaren Dübel verwirklicht werden, die sich sowohl auf die Mittel zur lösbaren Fixierung der Schraubenfeder 32 in der vorgespannten Lage als auch auf die spezielle Ausgestaltung der Einzelteile der Dübel beziehen. So kann das Spannelement beispielsweise auch von einem mit seinen Enden an den Hülsen 30 bzw. 34 befestigten, über die Schraubenfeder 32 gezogenen Kunststoff-Schlauch gebildet sein, wobei die Befestigung an der Hülse 30 beispielsweise wiederum durch eine mit einem perforierten Schlauchteil verbundene Zuglasche lösbar ausgebildet ist. Wesentlich ist jedoch in jedem Fall, dass die Riegelelemente durch eine durch Zusammendrücken vorspannbare Feder — die nicht unbedingt die Form einer Schraubenfeder haben muss, sondern beispielsweise auch aus geschichteten Scheibenfedern zusammengesetzt oder ein in Axialrichtung elastisch zusammendrückbarer hülsenförmiger Körper sein kann — in die ausgeschwenkte, die Hinterschnittfläche hintergreifende Lage vorspannbar sind. Diese Vorspannung kann entweder durch eine nach dem Einsetzen des Dübels in die zugehörige hinterschnittene Bohrung lösbare Fixierung vorgegeben sein, oder der Dübel wird mit noch entspannter Feder in die Bohrung eingeführt und dann — beispielsweise durch Drehen der Mutter unter gleichzeitigem Gegenhalten am äusseren Ende des Befestigungsbolzens — so gespannt, dass die Riegelelemente über den konisch verjüngten Bauteil nach aussen verschwenkt werden.

## Patentansprüche

1. In einer mit einer radial umlaufenden Hinterschnittfläche (17) versehenen Bohrung (12) formschlüssig setzbarer Dübel (10) mit einem dem Durchmesser der Bohrung (12) im wesentlichen entsprechenden und in die Bohrung einführbaren Dübelkörper, an dem Riegelelemente (22) gehaltert sind, deren zur Bohrungsmündung weisende Enden von einer innerhalb des Durchmessers der Bohrung (12) liegenden Lage in eine Lage verschwenkbar sind, in welcher sie zumindest teilweise über den Durchmesser des Dübelkörpers vorstehen und die Hinterschnittfläche (17) der Bohrung (12) verriegelnd hintergreifen, wobei der Dübelkörper ein am bohrungsinneren Ende eines langgestreckten Befestigungsbolzens (18) angeordnetes Kopfstück (20) relativ geringer Höhe ist, auf dem die bohrungsinneren Enden der zu einer den Befestigungsbolzen (18) umschliessenden dickwandigen zylindrischen Hülse zusammengeschlossenen Riegelelemente (22) aufsitzen, und der an seinem äusseren Ende einen Schraubenkopf oder eine auf ein Gewinde des Befestigungsbolzens (18) aufgeschraubte Mutter (38) tragende Befestigungsbolzen einen zwischen die zur Bohrungsmündung weisenden Enden der Riegelelemente (22) eingreifenden, sich zum Bohrungsinnern konisch verjüngenden Bauteil (28) aufweist, der bei einer Verschiebung des Kopfstücks (20) in Richtung zur Bohrungsmündung die rückwärtigen Enden der Riegelelemente (22) zwangsläufig nach aussen verschwenkt, und wobei zwischen dem längsverschieblich auf dem Befestigungsbolzen (18) angeordneten, sich konisch verjüngenden Bauteil (28) und dem Schraubenkopf bzw. der Mutter (38) wenigstens eine, in Bolzenlängsrichtung verschiebliche Hülse (34; 30) und eine durch axiale Zusammendrückung unter Vorspannung setzbare Schraubenfeder (32) angeordnet sind, dadurch gekennzeichnet, dass die Schraubenfeder (32) zwischen einer mit ihrem bohrungsinneren Ende an dem sich konisch verjüngenden Bauteil (28) anschliessenden Hülse (30) und einer mit ihrem bohrungsäusseren Ende an der Unterseite des Schraubenkopfs bzw. der Mutter (38) oder einer gegebenenfalls darunter angeordneten Unterlegscheibe (36) abgestützten Hülse (34) angeordnet ist, und dass die Schraubenfeder (32) in axial zusammengedrückter Form vorgespannt und die Vorspannung durch wenigstens ein mit seinen Enden an jeweils einer der beiden Hülsen (30; 34) befestigtes unter Zugspannung stehendes Spannelement (42, 44, 46; 50) fixiert ist.

2. Dübel nach Anspruch 1, dadurch gekennzeichnet, dass das Spannelement ein mit seinen Enden an jeweils einer der Hülsen (30; 34) verklebtes Band (42) ist.

3. Dübel nach Anspruch 1 oder 2, dadurch gekennzeichnet, dass eine Zuglasche (48; 58) zum Abreissen bzw. Durchtrennen des Spannelements (42, 44, 46; 50) im Bereich seiner Befestigung an der äusseren Hülse (34) vorgesehen ist.

4. In einer mit einer radial umlaufenden Hinterschnittfläche (17) versehenen Bohrung (12) formschlüssig setzbarer Dübel (10') mit einem dem Durchmesser der Bohrung (12) im wesentlichen entsprechenden und in die Bohrung einführbaren Dübelkörper, an dem Riegelelemente (22) gehaltert sind, deren zur Bohrungsmündung weisende Enden von einer innerhalb des Durchmessers der Bohrung (12) liegenden Lage in eine Lage verschwenkbar sind, in welcher sie zumindest teilweise über den Durchmesser des Dübelkörpers vorstehen und die Hinterschnittfläche (17) der Bohrung (12) verriegelnd hintergreifen, wobei der Dübelkörper ein am bohrungsinneren Ende eines langgestreckten Befestigungsbolzens (18) angeordnetes Kopfstück (20) relativ geringer Höhe ist, auf dem die bohrungsinneren Enden der zu einer den Befestigungsbolzen (18) umschliessenden dickwandigen zylindrischen Hülse zusammengeschlossenen Riegelelemente (22) aufsitzen, und der an seinem äusseren Ende einen Schraubenkopf oder eine auf ein Gewinde des Befestigungsbolzens (18) aufgeschraubte Mutter (38) tragende Befestigungsbolzen (18) einen zwischen die zur Bohrungsmündung weisenden Enden der Riegelelemente (22) eingreifenden, sich zum Bohrungsinnern konisch verjüngenden Bauteil (28) aufweist, der bei einer Verschiebung des Kopfstücks (20) in Richtung zur Bohrungsmündung die rückwärtigen Enden der Riegelelemente (22) zwangsläufig nach aussen verschwenkt, und wobei zwischen dem längsverschieblich auf dem Befestigungsbolzen (18) angeordneten, sich konisch verjüngenden Bauteil (28) und dem Schraubenkopf bzw. der Mutter (38) wenigstens eine in Bolzenlängsrichtung verschiebliche Hülse (34; 30) und eine durch axiale Zusammendrückung unter Vorspannung setzbare Schraubenfeder (32) angeordnet sind, dadurch gekennzeichnet, dass die Vorspannung der Schraubenfeder (32) durch einen über den zur Bohrungsmündung weisenden Endbereich der Riegelelemente (32) gelegten Spannring (64) fixiert ist.

5. Dübel nach Anspruch 4, dadurch gekennzeichnet, dass der Spannring (64) zumindest einen, vorzugsweise mehrere, in gleichmässigen Winkelabständen verteilte, über das Durchmessermass der zugehörigen Bohrung (12) vortretende(n) Ringabschnitt(e) (Lappen 66) aufweist, der bzw. die beim Einschieben des Dübels (10') in eine zugehörige Bohrung (12) an der Oberfläche des zu befestigenden Werkstücks bzw. der mit der Bohrung (12) versehenen Wand anstösst bzw. anstossen und bei fortgesetztem Einschiebevorgang den Spannring (64) von den Riegelementen (22) abstreift bzw. abstreifen.

6. Dübel nach einem der Ansprüche 1 bis 5, bei dem die Regelelemente (22) durch einen auf ihren Aussenseiten aufgelegten, elastisch aufweitbaren Ring (26) in der eingeschwenkten Stellung gehalten sind, dadurch gekennzeichnet, dass die in der Schraubenfeder (32) speicherbare Federkraft grösser ist als der vom elastisch aufweitbaren Ring (26) einer Verschwenkung der Riegelelemente (22) entgegengesetzte Widerstand.

7. Dübel nach einem der Ansprüche 1 bis 6, dadurch gekennzeichnet, dass in den zur Bohrungsmündung weisenden Stirnflächen der Riegelelemente (22) jeweils wenigstens ein, vorzugsweise mehrere, radial verlaufende Zähne (27) mit zugespitztem Querschnitt eingearbeitet sind.

8. Dübel nach einem der Ansprüche 1 bis 7, dadurch gekennzeichnet, dass die ins Bohrungsinnere weisenden Stirnflächen der Riegelelemente (22) derart abgeschrägt sind, dass sie in ausgeschwenkter Verriegelungsstellung flächig an der zur Bohrungsmündung weisenden Stirnfläche des Kopfstücks (20) abgestützt sind, und dass von den Stirnflächen der Riegelelemente (22) je eine Halterungsrippe (29) vorspringt, die in der ausgeschwenkten Verriegelungsstellung komplementär in eine in der Stirnfläche des Kopfstücks (20) vorgesehene Ringnut (23) eingreift.

**Revendications**

1. Goujon (10) se posant par emboîtement dans un trou (12) pourvu d'une surface radiale de révolution en contredépouille (17), comportant un corps de diamètre correspondant sensiblement au diamètre du trou (12) et pouvant être introduit dans ce dernier, corps auquel sont assujettis des éléments de verrouillage (22) dont l'extrémité dirigée vers l'orifice du trou peut basculer d'une position située à l'intérieur du diamètre du trou à une position dans laquelle elle dépasse au moins en partie du diamètre du corps et vient en prise, en produisant un verrouillage, avec la surface en contredépouille (17) du trou (12), le corps étant une pièce de tête (20) de hauteur relativement petite placée à l'extrémité intérieure au trou d'un boulon de fixation allongé (18) et sur laquelle s'appuient les extrémités dirigées vers l'intérieur du trou des éléments de verrouillage (22) rassemblés en une douille cylindrique à paroi épaisse entourant le boulon de fixation (18), le boulon de fixation, portant à son extrémité extérieure une tête de vis ou un écrou (38) vissé sur un filetage fait sur lui, présentant un élément (28) s'amincissant coniquement vers l'intérieur du trou et s'engageant entre les extrémités dirigées vers l'orifice du trou des éléments de verrouillage (22) qui, lors du déplacement de la pièce de tête (20) vers l'orifice du trou, fait basculer vers l'extérieur l'extrémité arrière des éléments de verrouillage (22) et, entre l'élément (28) s'amincissant coniquement monté sur le boulon de fixation et mobile le long de lui et la tête de vis ou l'écrou (38), étant placés au moins une douille (34, 30) mobile dans la direction longitudinale du boulon et un ressort hélicoïdal (32) pouvant être mis en précontrainte par compression axiale, goujon caractérisé par le fait que le ressort hélicoïdal (32) est placé entre une douille (30), dont l'extrémité dirigée vers l'intérieur du trou est contiguë à l'élément s'amincissant coniquement (28), et une douille (34) dont l'extrémité dirigée vers l'orifice du trou est appuyée contre le dessous de la tête de vis ou de l'écrou (38), ou contre une rondelle (36) éventuellement placée sous ces derniers, et que le ressort hélicoïdal (32) est précontraint en étant comprimé axialement et la précontrainte est fixée par au moins un élément de serrage (42, 44, 46; 50) tendu dont les extrémités sont fixées chacune à une des deux douilles (30; 34).

2. Goujon selon la revendication 1, dans lequel l'élément de serrage est une bande (42) dont les extrémités sont collées chacune à une des bouilles (30, 34).

3. Goujon selon l'une des revendications 1 et 2, dans lequel une languette (48; 58) destinée à l'arrachement ou la séparation de l'élément de serrage (42, 44, 46; 50) est prévue dans la zone de fixation de celui-ci à la douille extérieure (34).

4. Goujon (10') se posant par emboîtement dans un trou (12) pourvu d'une surface radiale de révolution en contredépouille (17), comportant un corps de diamètre correspondant sensiblement au diamètre du trou (12) et pouvant être introduit dans ce dernier, corps auquel sont assujettis des éléments de verrouillage (22) dont l'extrémité dirigée vers l'orifice du trou peut basculer d'une position située à l'intérieur du diamètre du trou à une position dans laquelle elle dépasse au moins en partie du diamètre du corps et vient en prise, en produisant un verrouillage, avec la surface en contredépouille (17) du trou (12), le corps étant une pièce de tête (20) de hauteur relativement petite placée à l'extrémité intérieure au trou d'un boulon de fixation allongé (18) et sur laquelle s'appuient les extrémités dirigées vers l'intérieur du trou des éléments de verrouillage (22) rassemblés en une douille cylindrique à paroi épaisse entourant le boulon de fixation (18), le boulon de fixation, portant à son extrémité extérieure une tête de vis ou un écrou (38) vissé sur un filetage fait sur lui, présentant un élément (28) s'amincissant coniquement vers l'intérieur du trou et s'engageant entre les extrémités dirigées vers l'orifice du trou des éléments des verrouillage (22) qui, lors du déplacement de la pièce de tête (20) vers l'orifice du trou, fait basculer vers l'extérieur l'extrémité arrière des éléments de verrouillage (22) et, entre l'élément (28) s'amincissant coniquement monté sur le boulon de fixation et mobile le long de lui et la tête de vis ou l'ecrou (38), étant placés au moins une douille (34, 30) mobile dans la direction longitudinale du boulon et un ressort hélicoïdal (32) pouvant être mis en précontrainte par compression axiale, goujon caractérisé par le fait que la précontrainte du ressort hélicoïdal (32) est fixée par un anneau de serrage (64) placé autour de l'extrémité des éléments de verrouillage (22) dirigée vers l'orifice du trou.

5. Goujon selon la revendication 4, dans lequel l'anneau de serrage (64) présente au moins une et de préférence plusieurs parties (pattes 66) angulairement équidistantes saillat au-délà du diamètre du trou (12) qui, lorsqu'on enfonce le goujon (10') dans le trou (12), viennent buter contre la surface de la pièce à fixer ou contre la paroi qui présente le trou (12) et, lorsqu'on continue d'enfoncer le goujon, enlèvent l'anneau de serrage (64) des éléments de verrouillage (22).

6. Goujon selon l'une des revendications 1 à 5, dont les éléments de verrouillage (22) sont maintenus en position rétractée par un anneau (26) expansible élastiquement placé sur leur côté extérieur, caractérisé par le fait que la force élastique emmagasinable dans le ressort hélicoïdal (32) est supérieure à la résistance qu'oppose l'anneau expansible élastiquement (26) au basculement des éléments de verrouillage (22).

7. Goujon selon l'une des revendications 1 à 6, dans lequel sont ménagées dans la face frontale de chacune des éléments de verrouillage (22) dirigée vers l'orifice de trou, au moins une et de préférence plusieurs dents (27) s'étendant radialement et taillées en pointe.

8. Goujon selon l'une des revendications 1 à 7, dans lequel la face frontale des éléments de verrouillage (22) dirigée vers l'intérieur du trou est inclinée de façon que ceux-ci, en position de verrouillage basculée vers l'extérieur, s'appuient à plat sur la face frontale de la pièce de tête (20) dirigée vers l'orifice du trou, et de la face frontale de chacun des éléments de verrouillage (22) saille une nervure d'arrêt (29) qui, en position de verrouillage basculée vers l'extérieur, est engagée dans une gorge circulaire (23) prévue dans la face frontale de la pièce de tête (20).

# Claims

1. Dowel which can be form-lockingly set in a bore (12) provided with a radial circumferential undercut surface (17), having a dowel body introducible into the bore and corresponding substantially to the diameter of the bore (12), on which locking elements (22) are mounted, whose ends pointing towards the bore orifice can be rocked from a position located within the diameter of the bore (12) to a position in which they project at least partially beyond the diameter of the toggle body and catch lockingly on the undercut surface (17) of the bore (12), the dowel body being a bottom piece (20) of relatively short length disposed on the bore-internal end of an elongated fastening bolt (18), on which bottom piece the bore-internal ends of the locking elements (22), closed together to form a thick-walled cylindrical sleeve surrounding the fastening bolt (18), are seated, and the fastening bolt (18) bearing a nut (38) threaded onto the fastening bolt has a component (28) conically tapering towards the bore interior and engaging between the ends of the locking elements (22) pointing towards the bore orifice, which component (28), upon a displacement of the bottom piece towards the bore orifice rocks the rearward ends of the locking elements (22) positively outwardly, while between the bolt heab (18) or nut (38) and the conically tapering component (28) disposed for longitudinal displacement on the fastening bolt (18) there are disposed at least one sleeve (34; 30) displaceable longitudinally of the bolt, and a coil spring (32) which can be placed under bias by axial compression, characterized in that the coil spring (32) is disposed between a sleeve 30) whose bore-internal end engages the conically tapering component (28) and a sleeve (34) whose bore-external end engages the underside of the bolt head or nut (38), as the case may be, or of a washer (36) disposed thereunder if desired, and in that the coil spring is biased in axially compressed form, and the bias of the coil spring (32) is fixed by at least one tensioning element (42, 44, 46; 50) under tractional tension which is fastened at each of its extremities to one of the two sleeves (30; 34).

2. Dowel according to claim 1, characterized in that the tensioning element is a strip (42) whose ends are cemented one to each of the sleeves (30; 34).

3. Dowel according to claim 1 or 2, characterized in that a pull tab (48; 58) is provided for the breaking off or parting of the tensioning element (42, 44, 46; 50) in the area of its fastening to the outer sleeve (34).

4. Dowel which can be form-lockingly set in a bore (12) provided with a radial circumferential undercut surface (17), having a dowel body introducible into the bore and corresponding substantially to the diameter of the bore (12), on which locking elements (22) are mounted, whose ends pointing towards the bore orifice can be rocked from a position located within the diameter of the bore (12) to a position in which they project at least partially beyond the diameter of the toggle body and catch lockingly on the undercut surface (17) of the bore (12) the dowel body being a bottom piece (20) of relatively short length disposed on the bore-internal end of an elongated fastening bolt (18), on which bottom piece the bore-internal ends of the locking elements (22), closed together to form a thick-walled cylindrical sleeve surrounding the fastening bolt (18), are seated, and the fastening bolt (18) bearing a nut (38) threaded onto the fastening bolt has a component (28) conically tapering towards the bore interior and engaging between the ends of the locking elements (22) pointing towards the bore orifice, which component (28), upon a displacement of the bottom piece (20) towards the bore orifice rocks the rearward ends of the locking elements (22) positively outwardly, while between the bolt head (18) or nut (38) and the conically tapering component (28) disposed for longitudinal displacement on the fastening bolt (18) there are disposed at least one sleeve (34; 30) displaceable longitudinally of the bolt and coil spring (32) which can be placed under bias by axial compression, charcaterized in that the bias of the coil spring (32) is fixed by a tensioning ring (64) laid over the end portion of the locking elements (22) pointing towards the bore orifice.

5. Dowel according to claim 4, characterized in that the ring (64) has at least one, preferably several, ring portion(s) (lugs 66) distributed at uniform angular intervals and projecting beyond the diametrical dimension of the corresponding bore (12), which upon the insertion of the dowel (10') into a corresponding bore (12) engage(s) the surface of the workpiece being mounted or the wall provided with the bore (12), and as the insertion continues strip(s) off the ring (64) from the locking elements (22).

6. Dowel according to one of claims 1 to 5, in which the locking elements (22) are held in the retracted position by a resiliently expandable ring (26) laid on their outer sides, characterized in that the spring force which can be stored in the coil spring (32) is greater than the resistance offered by the resiliently expandable ring (26) to any rocking of the locking elements (22).

7. Dowel according to one of claims 1 to 6, characterized in that, in each of the end surfaces of the locking elements (22) facing towards the bore orifice at least one, preferably more radially arrayed teeth (27) of pointed cross section are made.

8. Dowel according to one of claims 1 to 7, characterized in that the end surfaces of the locking elements (22) facing the interior of the bore are slanted such that they make broad-surface contact with the end surface of the bottom piece (20) facing the bore orifice when they are in the outspread, locking position, and that from the end surfaces of the locking elements (22) there projects one holding rib (29) each which engages matingly in an annular groove (23) provided in the end surface of the bottom piece (20) when they are in the outspread, locking position.

**FIG. 1**

**FIG. 5**

**FIG. 6**

FIG. 2

FIG. 3

FIG. 4

# FIG. 7

27

22

24

29

# FIG. 8

20

9

9

23

# FIG. 9

23

20